# EUROPEAN PATENT APPLICATION

(11) **EP 4 718 914 A2**
(43) Date of publication of application: **01.04.2026**
(21) Application number: 26158460.1
(22) Date of filing: 01.04.2022
(51) Int. Cl.: H04W 48/12

(54) **COMMUNICATION CONTROL METHOD AND BASE STATION**

(30) Priority: 01.04.2021 US 202163169334 P
(62) Divisional of application: 22781334.2
(71) Applicant: Kyocera Corporation, Kyoto-shi, Kyoto 612-8501 (JP)
(72) Inventor: FUJISHIRO, Masato, Kyoto-shi, Kyoto 612-8501 (JP); CHANG, Henry, San Diego, California 92123 (US)
(74) Representative: Viering, Jentschura & Partner mbB Patent- und Rechtsanwälte

(57) **Abstract**

In a first aspect, a communication control method is used in a mobile communication system for providing a multicast broadcast service (MBS) from a base station to a user equipment, the communication control method including: broadcasting, by a base station, an MBS system information block; and transmitting, by the base station, scheduling information of an MBS traffic channel on an MBS control channel, in which the MBS system information block includes a search space identifier for a user equipment to receive the MBS control channel, and the search space identifier indicates a search space that is a resource range to be decoded by the user equipment in a physical downlink control channel associated with the MBS control channel.

## Description

### TECHNICAL FIELD

The present disclosure relates to a communication control method and a base station used in a mobile communication system.

### BACKGROUND OF INVENTION

In recent years, a mobile communication system of the fifth generation (5G) has been attracting attention. New Radio (NR), which is a Radio Access Technology (RAT) of the 5G System, has features such as high speed, large capacity, high reliability, and low latency compared to Long Term Evolution (LTE), which is a fourth-generation radio access technology.

### CITATION LIST

### NON-PATENT LITERATURE

Non-Patent Document 1: 3GPP Technical Specification "3GPP TS 38.300 V16.2.0 (2020-07)"

### SUMMARY

In a first aspect, a communication control method is used in a mobile communication system for providing a multicast broadcast service (MBS) from a base station to a user equipment, the communication control method including: broadcasting, by a base station, an MBS system information block; and transmitting, by the base station, scheduling information of an MBS traffic channel on an MBS control channel, in which the MBS system information block includes a search space identifier for a user equipment to receive the MBS control channel, and the search space identifier indicates a search space that is a resource range to be decoded by the user equipment in a physical downlink control channel associated with the MBS control channel.

In a second aspect, a communication control method is used in a mobile communication system for providing a multicast broadcast service (MBS) from a base station to a user equipment, the communication control method including: broadcasting, by a base station, a predetermined system information block to be used in scheduling an MBS system information block; broadcasting, by the base station, the MBS system information block; and transmitting, by the base station, scheduling information of an MBS traffic channel on an MBS control channel, in which the predetermined system information block includes a search space identifier for a user equipment to receive the MBS control channel, and the search space identifier indicates a search space that is a resource range to be decoded by the user equipment in a physical downlink control channel associated with the MBS control channel.

In a third aspect, a communication control method is used in a mobile communication system for providing a multicast broadcast service (MBS) from a base station to a user equipment, the communication control method including: broadcasting, by a base station, an MBS system information block; and transmitting, by the base station, on an MBS control channel, scheduling information of an MBS traffic channel and a search space identifier for a user equipment to receive the MBS traffic channel, wherein the search space identifier indicates a search space that is a resource range to be decoded by the user equipment in a physical downlink control channel associated with the MBS traffic channel.

In a fourth aspect, a communication control method is used in a mobile communication system for providing a multicast broadcast service (MBS) from a base station to a user equipment, the communication control method including: transmitting, in a (first) cell, a notification message related to MBS transmission in a neighboring cell different from the cell, from a base station managing the cell to a user equipment, in which the notification message includes a search space identifier for the user equipment to receive a predetermined channel provided in the neighboring cell different from the cell, the search space identifier includes a search space identifier indicating a search space that is a resource range to be decoded by the user equipment in a physical downlink control channel associated with the predetermined channel provided in the neighboring cell, and the predetermined channel is an MBS control channel or an MBS traffic channel provided in the neighboring cell.

In a fifth aspect, a communication control method is a communication control method used in a mobile communication system for providing a multicast broadcast service (MBS) from a base station to a user equipment, the communication control method including: broadcasting, by a base station managing a cell, an MBS system information block for an MBS; and transmitting, by the base station, a plurality of MBS control channels in the cell, in which the MBS system information block includes a change notification Radio Network Temporary Identifier (RNTI) for each of the plurality of MBS control channels, and the change notification RNTI is an RNTI used for a user equipment to receive a change notification indicating that a content of a corresponding MBS control channel has been changed.

In a sixth aspect, a base station includes a processor that performs the communication control method according to any one of the first to fifth aspects.

### BRIEF DESCRIPTION OF THE DRAWINGS

FIG. 1 is a diagram illustrating a configuration of a mobile communication system according to an embodiment.
FIG. 2 is a diagram illustrating a configuration of a user equipment (UE) according to an embodiment.
FIG. 3 is a diagram illustrating a configuration of a base station (gNB) according to an embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating a correspondence relationship between a downlink Logical channel and a downlink Transport channel according to an embodiment.
FIG. 7 is a diagram illustrating a delivery method of MBS data according to an embodiment.
FIG. 8 is a diagram illustrating a correspondence relationship between channels according to an embodiment.
FIG. 9 is a diagram illustrating Operation Example 1 of the mobile communication system according to an embodiment.
FIG. 10 is a diagram illustrating Operation Example 2 of the mobile communication system according to an embodiment.
FIG. 11 is a diagram illustrating Operation Example 3 of the mobile communication system according to an embodiment.
FIG. 12 is a diagram illustrating an example of an operation environment in Operation Example 4 of the mobile communication system according to an embodiment.
FIG. 13 is a diagram illustrating Operation Example 4 of the mobile communication system according to an embodiment.
FIG. 14 is a diagram illustrating Operation Example 5 of the mobile communication system according to an embodiment.

### DESCRIPTION OF EMBODIMENTS

Introduction of multicast broadcast services to the 5G system (NR) has been under study. NR multicast broadcast services are desired to provide enhanced services compared to LTE multicast broadcast services.

The present disclosure provides a communication control method for implementing enhanced multicast and broadcast services.

A mobile communication system according to an embodiment is described with reference to the drawings. In the description of the drawings, the same or similar parts are denoted by the same or similar reference signs.

### Configuration of Mobile Communication System

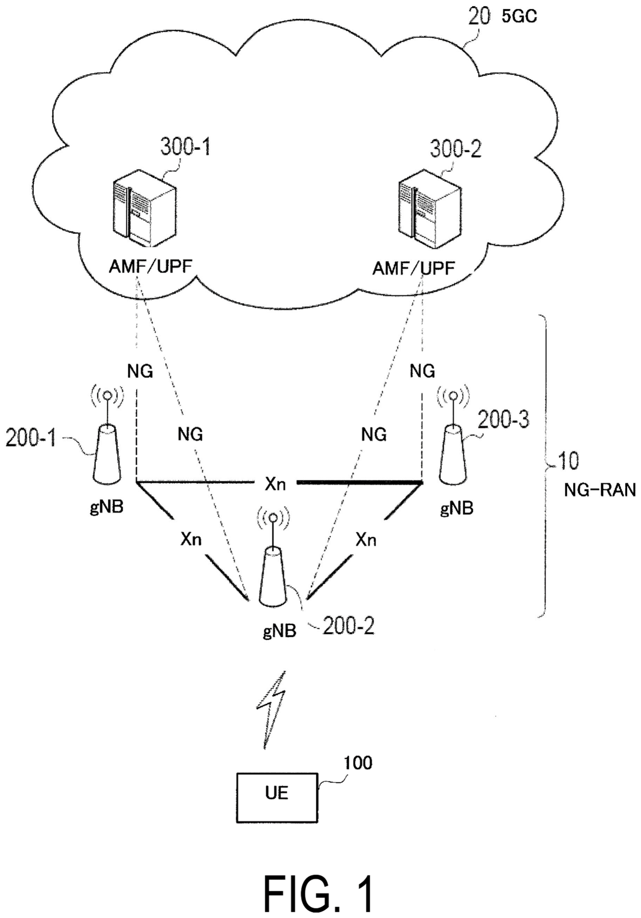

First, a configuration of a mobile communication system according to an embodiment is described. FIG. 1 is a diagram illustrating a configuration of a mobile communication system according to an embodiment. This mobile communication system complies with the 5th Generation System (5GS) of the 3GPP standard. The description below takes the 5GS as an example, but Long Term Evolution (LTE) system may be at least partially applied to the mobile communication system.

As illustrated in FIG. 1, the mobile communication system includes a User Equipment (UE) 100, a 5G radio access network (Next Generation Radio Access Network (NG-RAN)) 10, and a 5G Core Network (5GC) 20.

The UE 100 is a mobile wireless communication apparatus. The UE 100 may be any apparatus as long as utilized by a user. Examples of the UE 100 include a mobile phone terminal (including a smartphone), a tablet terminal, a notebook PC, a communication module (including a communication card or a chipset), a sensor or an apparatus provided on a sensor, a vehicle or an apparatus provided on a vehicle (Vehicle UE), and/or a flying object or an apparatus provided on a flying object (Aerial UE).

The NG-RAN 10 includes base stations (referred to as "gNBs" in the 5G system) 200. The gNBs 200 are interconnected via an Xn interface which is an inter-base station interface. Each gNB 200 manages one or a plurality of cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency.

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

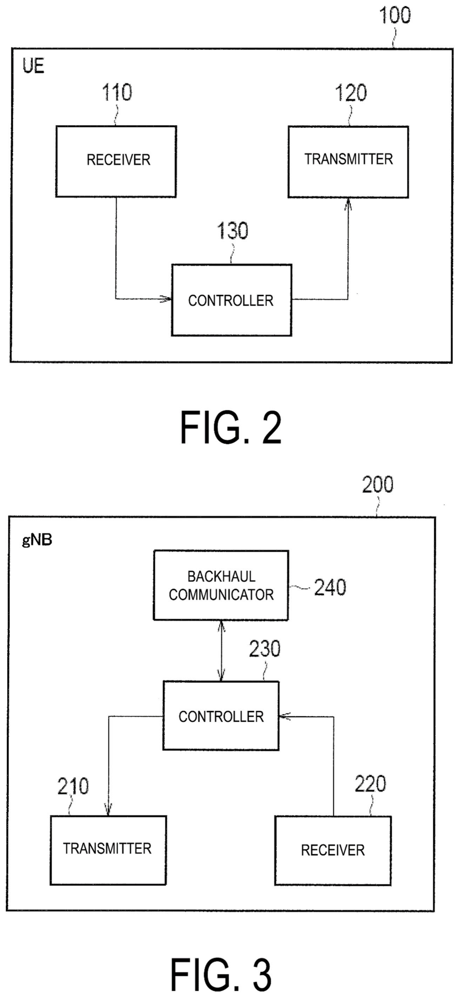

FIG. 2 is a diagram illustrating a configuration of the UE 100 (user equipment) to the embodiment.

As illustrated in FIG. 2, the UE 100 includes a receiver 110, a transmitter 120, and a controller 130.

The receiver 110 performs various types of reception under control of the controller 130. The receiver 110 includes an antenna and a reception device. The reception device converts a radio signal received through the antenna into a baseband signal (a reception signal) and outputs the resulting signal to the controller 130.

The transmitter 120 performs various types of transmission under control of the controller 130. The transmitter 120 includes an antenna and a transmission device. The transmission device converts a baseband signal (a transmission signal) output by the controller 130 into a radio signal and transmits the resulting signal through the antenna.

The controller 130 performs various types of control in the UE 100. The controller 130 includes at least one processor and at least one memory. The memory stores a program to be executed by the processor and information to be used for processing by the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

FIG. 3 is a diagram illustrating a configuration of the gNB 200 (base station) according to the embodiment.

As illustrated in FIG. 3, the gNB 200 includes a transmitter 210, a receiver 220, a controller 230, and a backhaul communicator 240.

The transmitter 210 performs various types of transmission under control of the controller 230. The transmitter 210 includes an antenna and a transmission device. The transmission device converts a baseband signal (a transmission signal) output by the controller 230 into a radio signal and transmits the resulting signal through the antenna.

The receiver 220 performs various types of reception under control of the controller 230. The receiver 220 includes an antenna and a reception device. The reception device converts a radio signal received through the antenna into a baseband signal (a reception signal) and outputs the resulting signal to the controller 230.

The controller 230 performs various types of controls for the gNB 200. The controller 230 includes at least one processor and at least one memory. The memory stores a program to be executed by the processor and information to be used for processing by the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via the inter-base station interface. The backhaul communicator 240 is connected to the AMF/UPF 300 via the interface between a base station and the core network. Note that the gNB may include a Central Unit (CU) and a Distributed Unit (DU) (i.e., functions are divided), and both units may be connected via an F1 interface.

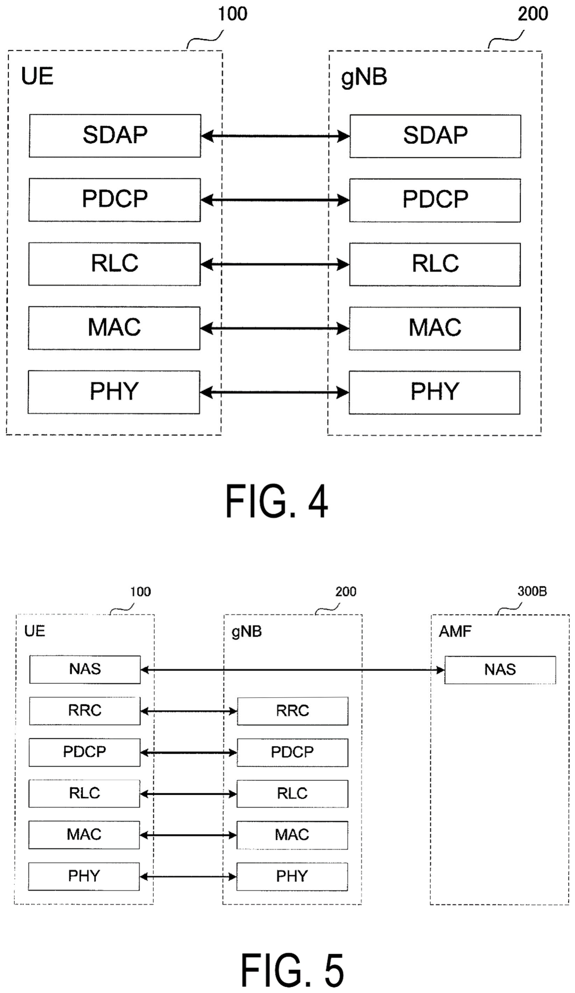

FIG. 4 is a diagram illustrating a configuration of a protocol stack of a radio interface of a user plane handling data.

As illustrated in FIG. 4, a radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs coding and decoding, modulation and demodulation, antenna mapping and demapping, and resource mapping and demapping. Data and control information are transmitted between the PHY layer of the UE 100 and the PHY layer of the gNB 200 via a physical channel.

The MAC layer performs preferential control of data, retransmission processing using a hybrid ARQ (HARQ), a random access procedure, and the like. Data and control information are transmitted between the MAC layer of the UE 100 and the MAC layer of the gNB 200 via a transport channel. The MAC layer of the gNB 200 includes a scheduler. The scheduler determines transport formats (transport block sizes, modulation and coding schemes (MCSs)) in the uplink and the downlink, and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression and decompression, and encryption and decryption.

The SDAP layer performs mapping between an IP flow as the unit of Quality of Service (QoS) control performed by a core network and a radio bearer as the unit of QoS control performed by an Access Stratum (AS). Note that, when the RAN is connected to the EPC, the SDAP need not be provided.

FIG. 5 is a diagram illustrating a configuration of a protocol stack of a radio interface of a control plane handling signaling (a control signal).

As illustrated in FIG. 5, the protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, reestablishment, and release of a radio bearer. When a connection between the RRC of the UE 100 and the RRC of the gNB 200 (RRC connection) exists, the UE 100 is in an RRC connected state. When a connection between the RRC of the UE 100 and the RRC of the gNB 200 (RRC connection) does not exist, the UE 100 is in an RRC idle state. When the connection between the RRC of the UE 100 and the RRC of the gNB 200 is suspended, the UE 100 is in an RRC inactive state.

The NAS layer which is positioned higher than the RRC layer performs session management, mobility management, and the like. NAS signaling is transmitted between the NAS layer of the UE 100 and the NAS layer of the AMF 300.

Note that the UE 100 includes an application layer other than the protocol of the radio interface.

### MBS

An MBS according to an embodiment is described. The MBS is a service in which the NG-RAN 10 can provide broadcast or multicast, i.e., Point To Multipoint (PTM) data transmission to the UE 100. The MBS may be referred to as the Multimedia Broadcast and Multicast Service (MBMS). Note that use cases (service types) of the MBS include public communication, mission critical communication, Vehicle to Everything (V2X) communication, IPv4 or IPv6 multicast delivery, Internet protocol television (IPTV), group communication, and software delivery.

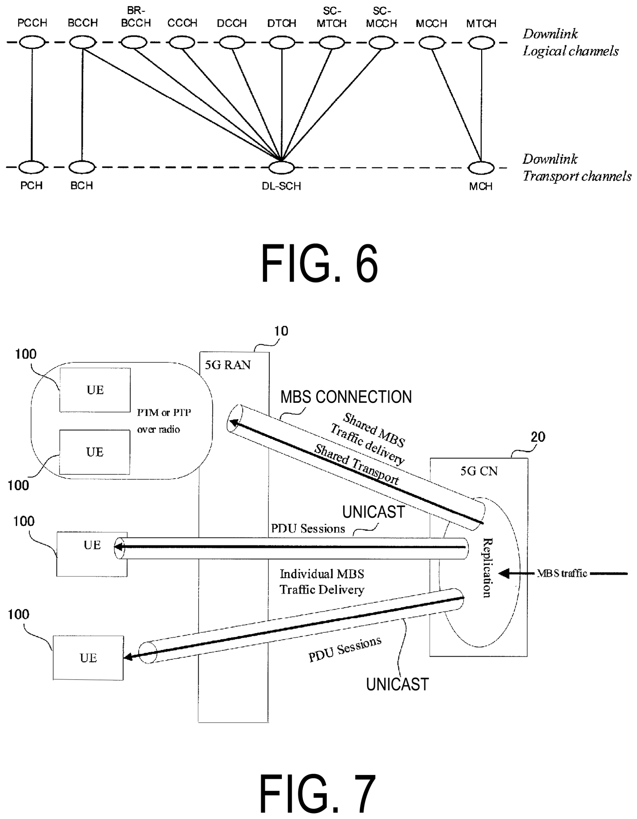

MBS Transmission in LTE includes two schemes, i.e., a Multicast Broadcast Single Frequency Network (MBSFN) transmission and Single Cell Point To Multipoint (SC-PTM) transmission. FIG. 6 is a diagram illustrating a correspondence relationship between a downlink Logical channel and a downlink Transport channel according to an embodiment.

As illustrated in FIG. 6, the logical channels used for MBSFN transmission are a Multicast Traffic Channel (MTCH) and a Multicast Control Channel (MCCH), and the transport channel used for MBSFN transmission is a Multicast Control Channel (MCH). The MBSFN transmission is designed primarily for multi-cell transmission, and in an MBSFN area including a plurality of cells, each cell synchronously transmits the same signal (the same data) in the same MBSFN subframe.

The logical channels used for SC-PTM transmission are a Single Cell Multicast Traffic Channel (SC-MTCH) and a Single Cell Multicast Control Channel (SC-MCCH), and the transport channel used for SC-PTM transmission is a Downlink Shared Channel (DL-SCH). The SC-PTM transmission is primarily designed for single-cell transmission, and corresponds to broadcast or multicast data transmission on a cell-by-cell basis. The physical channels used for SC-PTM transmission are a Physical Downlink Control Channel (PDCCH) and a Physical Downlink Shared Channel (PDSCH), and enables dynamic resource allocation.

Although an example will be mainly described below in which the MBS is provided using a scheme same as, and/or similar to, the SC-PTM transmission scheme, the MBS may be provided using the MBSFN transmission scheme. An example will be mainly described in which the MBS is provided using multicast. Accordingly, the MBS may be interpreted as multicast. Note that, the MBS may be provided using broadcast.

MBS data refers to data provided by the MBS, an MBS control channel refers to the MCCH or SC-MCCH, and an MBS traffic channel refers to the MTCH or SC-MTCH. Note that the MBS data may be transmitted using unicast. The MBS data may be referred to as MBS packets or MBS traffic.

The MBS control channel is a point-to-multipoint (PTM) downlink channel used to transmit MBS control information from the gNB 200 to the UE 100. The MBS control channel is mapped to a Downlink Shared Channel (DL-SCH) being a type of transport channel.

The MBS traffic channel is a point-to-multipoint (PTM) downlink channel used to transmit MBS data from the gNB 200 to the UE 100. The MBS traffic channel is a type of logical channel and is mapped to the DL-SCH. The MBS traffic channel and the MBS session are associated with each other on a one-to-one basis.

The DL-SCH is mapped to a Physical Downlink Shared Channel (PDSCH) that is a type of physical channel. The PDSCH is scheduled by Downlink Control Information (DCI) carried on a Physical Downlink Control Channel (PDCCH) that is a type of physical channel.

The network can provide different MBS services for respective MBS sessions. The MBS session is identified by at least one of Temporary Mobile Group Identity (TMGI) and a session identifier, and at least one of these identifiers is referred to as an MBS session identifier. Such an MBS session identifier may be referred to as an MBS service identifier or a multicast group identifier.

FIG. 7 is a diagram illustrating a delivery method of the MBS data according to an embodiment.

As illustrated in FIG. 7, the MBS data (MBS Traffic) is delivered from a single data source (application service provider) to a plurality of UEs. The 5G CN (5GC) 20, which is a 5G core network, receives the MBS data from the application service provider and performs replication of the MBS data to deliver the resultant.

From the perspective of the 5GC 20, two delivery methods are possible: shared MBS data delivery (Shared MBS Traffic delivery) and individual MBS data delivery (Individual MBS Traffic delivery).

In the shared MBS data delivery, a connection is established between the NG-RAN 10 that is a 5G radio access network (5G RAN) and the 5GC 20 to deliver the MBS data from the 5GC 20 to the NG-RAN 10. Such a connection (a tunnel) is hereinafter referred to as an "MBS connection".

The MBS connection may be referred to as a Shared MBS Traffic delivery connection or a shared transport. The MBS connection terminates at the NG-RAN 10 (i.e., the gNB 200). The MBS connection may correspond to an MBS session on a one-to-one basis.

The gNB 200 selects a transmission scheme either of Point-to-Point (PTP: unicast) or Point-to-Multipoint (PTM: multicast or broadcast) at the discretion of the gNB 200, and transmits the MBS data to the UE 100 through the selected transmission scheme.

On the other hand, in the individual MBS data delivery, a unicast session is established between the NG-RAN 10 and the UE 100 to individually deliver the MBS data from the 5GC 20 to the UE 100. Such unicast may be referred to as a PDU session. The unicast (PDU session) terminates at the UE 100.

### Correspondence Relationship between Channels

A correspondence relationship between channels according to an embodiment will be described.

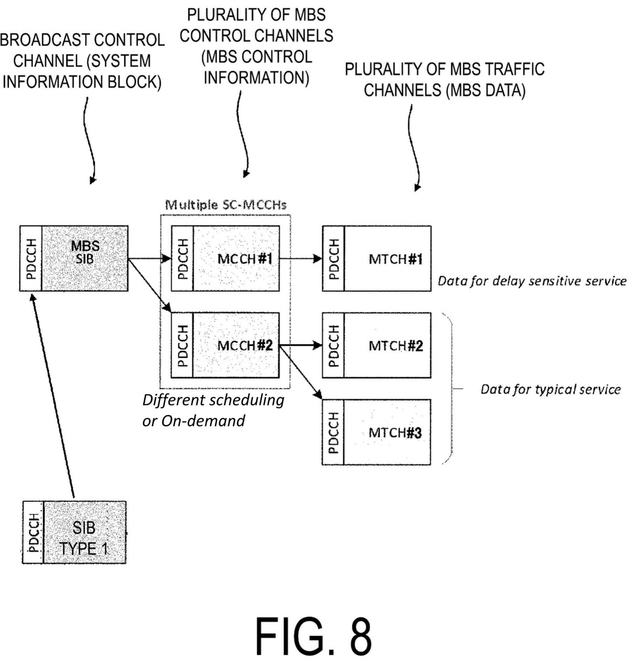

FIG. 8 is a diagram illustrating a correspondence relationship between channels according to an embodiment. The channels illustrated in FIG. 8 is provided in one cell. Although FIG. 8 illustrates an example in which a plurality of MBS control channels are provided in one cell, only one MBS control channel may be provided in one cell.

Each block illustrated in FIG. 8 represents one channel. The indication "PDCCH" in each block means that a radio resource of the channel (PDSCH) is allocated by the PDCCH in the physical layer. In other words, the assumption is that a broadcast control channel, the MBS control channels, and the MBS traffic channels are all mapped to the DL-SCH.

Firstly, the gNB 200 broadcasts an SIB type 1 on the broadcast control channel. The SIB type 1 includes scheduling information of an MBS system information block (MBS SIB) (hereinafter, referred to as "MBS SIB scheduling information"). The MBS SIB scheduling information is information for scheduling a message (an SI message described below) carrying the MBS SIB. The MBS SIB is a system information block for MBS and is a type of Other System Information (OSI) described below.

Secondly, the gNB 200 broadcasts the MBS SIB on the broadcast control channel according to scheduling based on the SIB type 1. The MBS SIB includes information indicating scheduling of an MBS control channel (hereinafter, referred to as "MBS control channel scheduling information"). Note that the MBS SIB is transmitted at a period scheduled by a predetermined SIB (for example, the SIB type 1). The MBS control channel scheduling information is information for identifying a candidate time position at which the MBS control channel may be transmitted. Such a candidate time position may be referred to as an MBS control channel transmission window. The candidate time position may include a predetermined number of periodically arranged time units. The time unit may be a slot. The time unit may be a subframe. The MBS control channel scheduling information includes a Repetition period (repetition transmission period), an Offset (offset value of SFN for performing scheduling), a Star point (scheduling start subframe/slot), a Duration (period of time for scheduling from Star point), a Modification period, and/or the like.

Note that the gNB 200 may provide a plurality of MBS control channels in a cell managed by the gNB 200. For example, each of the MBS control channels is associated with a different service quality requirement (or service category). This enables the MBS control channels optimized according to the service quality requirement to be configured. In this case, the MBS SIB may schedule each of the plurality of MBS control channels (MCCH#1 and MCCH#2). A different scheduling operation is applicable to each of the MBS control channels. Note that each MBS control channel is transmitted at a period indicated by the MBS SIB.

Thirdly, the gNB 200 broadcasts the MBS traffic channel scheduling information on the MBS control channel, according to the MBS control channel scheduling information. The MBS traffic channel scheduling information is information for identifying a candidate time position at which the MBS traffic channel may be transmitted. The candidate time position may include a predetermined number of periodically arranged time units. The time unit may be a slot. The time unit may be a subframe. The MBS traffic channel scheduling information includes an On duration timer, a DRX inactivity timer, a Scheduling period (transmission period), and/or a Start offset (transmission SFN offset value).

FIG. 8 illustrates an example in which MCCH#1 points to one MBS traffic channel (MTCH#1), and MCCH#2 points to two MBS traffic channels (MTCH#2 and MTCH#3). MTCH#1 is an MBS traffic channel for transmitting MBS data for delay sensitive MBS service (Data for delay sensitive service). MTCH#2 and MTCH#3 are MBS traffic channels for transmitting MBS data of typical MBS service (Data for typical service).

Fourthly, the gNB 200 transmits (e.g., PTM transmission) the MBS data on the MBS traffic channel, according to the MBS traffic channel scheduling information.

### Search Space

A search space according to an embodiment will be described.

In the 5G/NR specifications, in order to reduce the number of times of blind decoding in the UE 100, a resource range in the PDCCH to be blindly decoded by the UE 100 is limited. Such a resource range is a time-frequency resource range, and includes a plurality of resource blocks in the frequency direction and a plurality of symbols in the time direction. Such a resource range is called a search space.
In an embodiment, the gNB 200 provides a plurality of search spaces in a cell of the gNB 200. The gNB 200 provides search space configuration information for configuring the plurality of search spaces in the cell of the gNB 200 by using the SIB type 1 or an RRC Reconfiguration message. Thus, the configuration of each of the search spaces can be dynamically modified, enabling resources to be optimized.

The search space configuration information includes, for each search space of the plurality of search spaces, a set of a search space identifier for identifying the search space and search space parameters for configuring the search space. The search space parameters identify a plurality of resource blocks and a plurality of symbols constituting the search space. The search space parameters include, for example, ControlResourceSetID, monitoringSlotPeriodicity AndOffset, and/or monitoringSymbolsWithinSlot. ControlResourceSetID is a parameter used to identify a resource block, and monitoringSlotPeriodicityAndOffset and monitoringSymbolsWithinSlot are parameters used to identify a symbol.

In an embodiment, the gNB 200 configures, in the cell of the gNB 200, one special search space (hereinafter referred to as a "specific search space") different from the plurality of search spaces described above. The specific search space is a search space where the UE 100 can identify, in accordance with a preconfigured rule, a plurality of resource blocks and a plurality of symbols constituting the specific search space, in other words, a scheduling and resource range. The UE 100 can identify the scheduling and resource range of the specific search space, even without search space configuration information from the gNB 200 for the specific search space.

The gNB 200 allocates a search space identifier of "0" to the specific search space. The specific search space may be referred to as a search space zero. The gNB 200 does not allocate a search space identifier of "0" to the plurality of search spaces described above to distinguish the specific search space from the plurality of search spaces. For example, the search spaces include the search space "0", which is the specific search space, and search spaces "1" to "4", which are the other search spaces.

In an embodiment, the gNB 200 associates a different search space with each type of downlink message transmitted in the cell of the gNB 200. The types of the downlink message include, for example, a system information message (SI message), and a paging message. The SI message is a message used to carry system information blocks other than the SIB type 1. The system information blocks other than the SIB type 1 are referred to as Other System Information (OSI). For example, the gNB 200 associates the SI message with the search space (search space #1) identified by the search space identifier "1" in the search space configuration information, associates the paging message with the search space (search space #2) identified by the search space identifier "2" in the search space configuration information, and transmits information indicating this association in the SIB type 1. Hereinafter, the search space associated with the SI message carrying the OSI is referred to as an "OSI search space".

### Operation Example 1 of Mobile Communication System

Operation Example 1 of the mobile communication system 1 according to an embodiment will be described.

In Operation Example 1, a search space is assumed to be allocated to the MBS control channel. In this case, the MBS control channel is allocated either the specific search space (for example, the search space "0") or one of the other search spaces (for example, search spaces "1" to "4"). Here, the scheduling of the MBS control channel differs between the case where the search space "0" is used and the other cases (search space "1" or the like). Note that a search space different from the OSI search space may be allocated to the MBS control channel. In this case, the UE 100 fails to receive the MBS control channel even though the UE 100 knows the OSI search space.

Under this assumption, the UE 100 needs to identify a search space associated with the MBS control channel in order to receive the MBS control channel. However, the UE 100 fails to determine which search space is to be blindly decoded by the UE 100 to receive the MBS control channel.

In Operation Example 1, the gNB 200 broadcasts the MBS SIB and transmits the scheduling information of the MBS traffic channel on the MBS control channel. The MBS SIB includes a search space identifier for the UE 100 to receive the MBS control channel. The search space identifier indicates a search space that is a resource range to be decoded by the UE 100 in the physical downlink control channel associated with the MBS control channel. This allows the UE 100 to determine which search space is to be blindly decoded in order to receive the MBS control channel.

In Operation Example 1, when a plurality of MBS control channels are provided in one cell of the gNB 200, the MBS SIB may include a search space identifier for each of the plurality of MBS control channels. Thus, even when a plurality of MBS control channels are provided in one cell of the gNB 200, the UE 100 can determine which search space is to be blindly decoded in order to receive each MBS control channel.

In Operation Example 1, when the MBS control channel is not associated with the specific search space, the gNB 200 may broadcast the MBS SIB further including MBS control channel scheduling information indicating scheduling of the MBS control channel. As described above, the specific search space is a search space where the UE 100 can identify the scheduling of the MBS control channel and the resource range in accordance with a preconfigured rule. As a result, the UE 100 can recognize the scheduling of the MBS control channel, even when the MBS control channel is not associated with the specific search space.

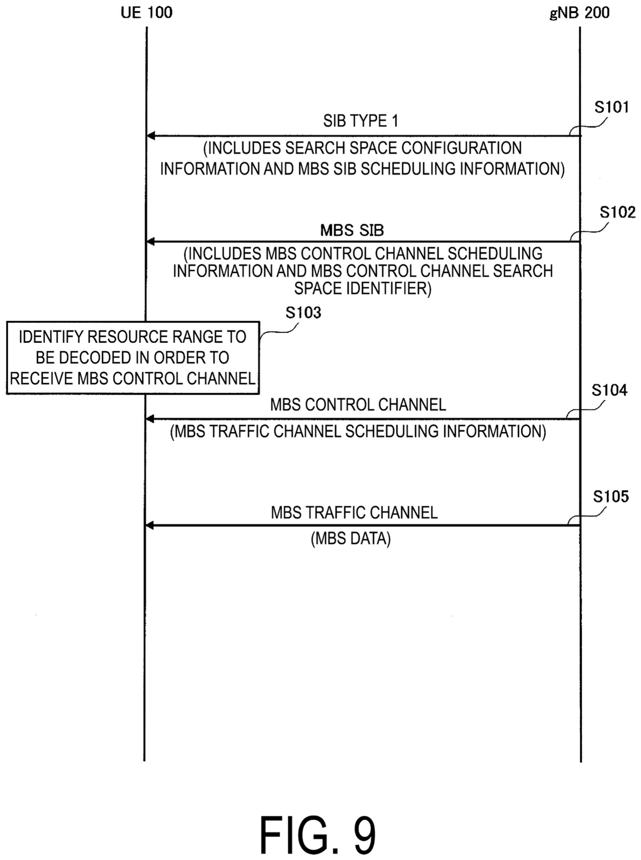

FIG. 9 is a diagram illustrating Operation Example 1 of the mobile communication system 1.

As illustrated in FIG. 9, in step S101, the gNB 200 broadcasts an SIB type 1. The SIB type 1 includes search space configuration information and MBS SIB scheduling information. The UE 100 receives the SIB type 1 from the gNB 200.

In step S102, the gNB 200 broadcasts an MBS SIB based on scheduling indicated by the MBS SIB scheduling information included in the SIB type 1. The UE 100 receives the MBS SIB, based on the scheduling indicated by the MBS SIB scheduling information included in the SIB type 1. The MBS SIB includes MBS control channel scheduling information.

In Operation Example 1, the MBS SIB further includes a search space identifier (hereinafter referred to as an "MBS control channel search space identifier") for the UE 100 to receive an MBS control channel. The MBS control channel search space identifier is one of search space identifiers included in the search space configuration information in the SIB type 1. Here, the gNB 200 associates the MBS control channel with one of a plurality of search spaces (for example, search spaces "1" to "4") configured by the search space configuration information in the SIB type 1. The gNB 200 includes, in the MBS SIB, the search space identifier of the search space associated with the MBS control channel.

When a plurality of MBS control channels are provided in a cell managed by the gNB 200, the gNB 200 may associate a different search space with each of the MBS control channels. In this case, in step S102, the gNB 200 broadcasts an MBS SIB including an MBS control channel search space identifier corresponding to each of the plurality of MBS control channels. The MBS SIB in this case includes, for example, for each MBS control channel of the plurality of MBS control channels, a set of an identifier of the MBS control channel and an MBS control channel search space identifier corresponding to the MBS control channel. The identifier of the MBS control channel may be the MBS session identifier described above. The identifier of the MBS control channel may be a channel identifier allocated to the MBS control channel. The identifier of the MBS control channel may be a Radio Network Temporary Identifier (RNTI) allocated to the MBS control channel.

In Operation Example 1, the gNB 200 may include, in the MBS SIB, MBS control channel scheduling information only when the specific search space is not associated with the MBS control channel. Here, when the MBS control channel is associated with the specific search space, the UE 100 can identify the resource range based on a preconfigured rule, without depending on the MBS control channel scheduling information. Therefore, in this case, the MBS control channel scheduling information is not needed. Accordingly, the gNB 200 includes, in the MBS SIB, the MBS control channel scheduling information when the MBS control channel is not associated with the specific search space.

In step S103, the UE 100 identifies the resource range of the PDCCH to be decoded in order to receive the MBS control channel, based on the MBS control channel scheduling information and the MBS control channel search space identifier included in the MBS SIB received in step S102. To be specific, firstly, the UE 100 determines the range of the reception timing of the MBS control channel from the MBS control channel scheduling information included in the MBS SIB received in step S102. Secondly, the UE 100 acquires, from the SIB type 1 received in step S101, the search space parameters corresponding to the MBS control channel search space identifier included in the MBS SIB received in step S102, and identifies the resource range of the PDCCH from the acquired search space parameters.

Upon receiving an MBS SIB including an MBS control channel search space identifier corresponding to each of a plurality of MBS control channels, the UE 100 identifies, based on the MBS SIB, the resource range to be decoded in order to receive the MBS control channel in which the UE 100 takes interest. To be specific, the UE 100 acquires the MBS control channel search space identifier associated with the MBS control channel in which the UE 100 takes interest, and identifies the resource range of the PDCCH to be decoded according to the acquired MBS control channel search space identifier.

In step S104, the gNB 200 transmits the MBS traffic channel scheduling information on the MBS control channel. The UE 100 receives the MBS control channel. Here, firstly, the UE 100 decodes (blindly decodes) the resource range identified in step S103 to acquire DCI carried on the PDCCH. Secondly, the UE 100 receives a PDSCH scheduled by the DCI, and receives an MBS control channel (MBS traffic channel scheduling information) mapped to the PDSCH.

In step S105, the gNB 200 transmits the MBS data on the MBS traffic channel. The UE 100 receives the MBS traffic channel (MBS data), based on the MBS traffic channel scheduling information received in step S104.

### Operation Example 2 of Mobile Communication System

Operation Example 2 of the mobile communication system 1 according to an embodiment will be described focusing on differences from Operation Example 1 described above.

Operation Example 1 described above mainly assumes that a dedicated search space is allocated for the MBS control channel. On the other hand, in Operation Example 2, an example will be described in which a common search space is used for the MBS control channel and the OSI. This eliminates the need to broadcast the information of the search space of the MBS control channel in the MBS SIB, allowing efficient operation to be achieved.

In Operation Example 2, the gNB 200 broadcasts the SIB type 1 used for scheduling the MBS SIB, broadcasts the MBS SIB, and transmits the scheduling information of the MBS traffic channel on the MBS control channel. Here, the SIB type 1 includes a search space identifier for the UE 100 to receive the MBS control channel. Specifically, the search space identifier is used in common for the MBS SIB, the system information block other than the SIB type 1, and the MBS control channel.

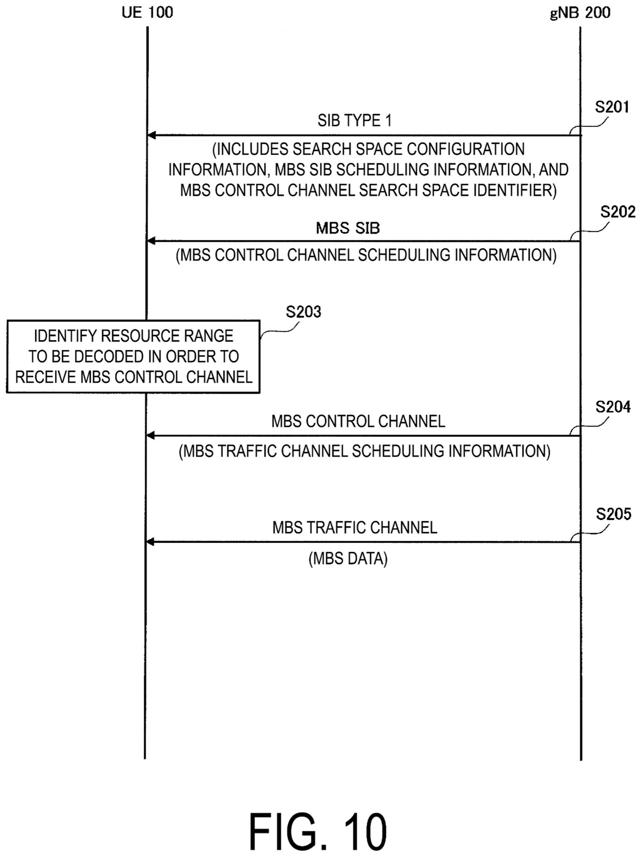

FIG. 10 is a diagram illustrating Operation Example 2 of the mobile communication system 1. Description overlapping with that of Operation Example 1 described above will be omitted.

As illustrated in FIG. 10, in step S201, the gNB 200 broadcasts an SIB type 1. The SIB type 1 includes search space configuration information and MBS SIB scheduling information. In Operation Example 2, the SIB type 1 further includes an MBS control channel search space identifier. The UE 100 receives the SIB type 1 from the gNB 200.

In step S202, the UE 100 receives an MBS SIB, based on the SIB type 1. The MBS SIB includes MBS control channel scheduling information.

In Operation Example 2, the MBS SIB includes no MBS control channel search space identifier.

In step S203, the UE 100 identifies the resource range to be decoded in order to receive the MBS control channel, based on the MBS control channel scheduling information received in step S202 and the MBS control channel search space identifier received in step S201.

The operation in steps S204 and S205 is the same as, and/or similar to, the operation in steps S104 and S105.

In Operation Example 2, the MBS control channel search space identifier may be information used in common for the MBS SIB and the OSI. In other words, the search space associated with the SI message carrying the OSI may be the same as, and/or similar to, the search space associated with the MBS control channel. In this case, in step S201, the SIB type 1 may include information indicating that the search space associated with the SI message is the same as, and/or similar to, the search space associated with the MBS control channel. Such information may be notified from the gNB 200 to the UE 100 in any other manner.

In Operation Example 2, when the search space associated with the SI message carrying the OSI is the same as, and/or similar to, the search space associated with the MBS control channel and the search space associated with the SI message carrying the OSI is the specific search space, the UE 100 may skip reception of the MBS SIB (operation in step S202). In this case, the UE 100 can identify the resource range based on a preconfigured rule, without depending on the MBS control channel scheduling information. Therefore, in this case, the MBS control channel scheduling information is not needed, and the UE 100 skips reception of the MBS SIB including the MBS control channel scheduling information.

### Operation Example 3 of Mobile Communication System

Operation Example 3 of the mobile communication system 1 according to an embodiment will be described focusing on differences from Operation Examples 1 and 2 described above.

In Operation Examples 1 and 2 described above, the search space of the MBS control channel has been mainly described. However, a search space is also assumed to be allocated to the MBS traffic channel. In Operation Example 3, the search space of the MBS traffic channel will be described.

In Operation Example 3, the gNB 200 transmits, on the MBS control channel, the scheduling information of the MBS traffic channel and the search space identifier for the UE 100 to receive the MBS traffic channel. The search space identifier indicates a search space that is a resource range to be decoded by the UE 100 in the physical downlink control channel associated with the MBS traffic channel. Thus, even when a search space is allocated to the MBS traffic channel, the UE 100 can identify the search space allocated to the MBS traffic channel.

In Operation Example 3, the gNB 200 may transmit a search space identifier for each of a plurality of MBS traffic channels. In other words, the gNB 200 may specify a search space for each MBS traffic channel. Thus, a different search space can be allocated to each MBS traffic channel, allowing congestion in the search space to be alleviated.

In Operation Example 3, when the MBS traffic channel is not associated with the specific search space (for example, the search space "0"), the gNB 200 transmits the scheduling information of the MBS traffic channel and the search space identifier on the MBS control channel. When the MBS traffic channel is associated with the specific search space, the gNB 200 transmits the search space identifier without transmitting the scheduling information of the MBS traffic channel. For the specific search space, the UE 100 itself can derive the scheduling and resource range of the specific search space, thus eliminating the need to transmit scheduling information for the MBS traffic channel.

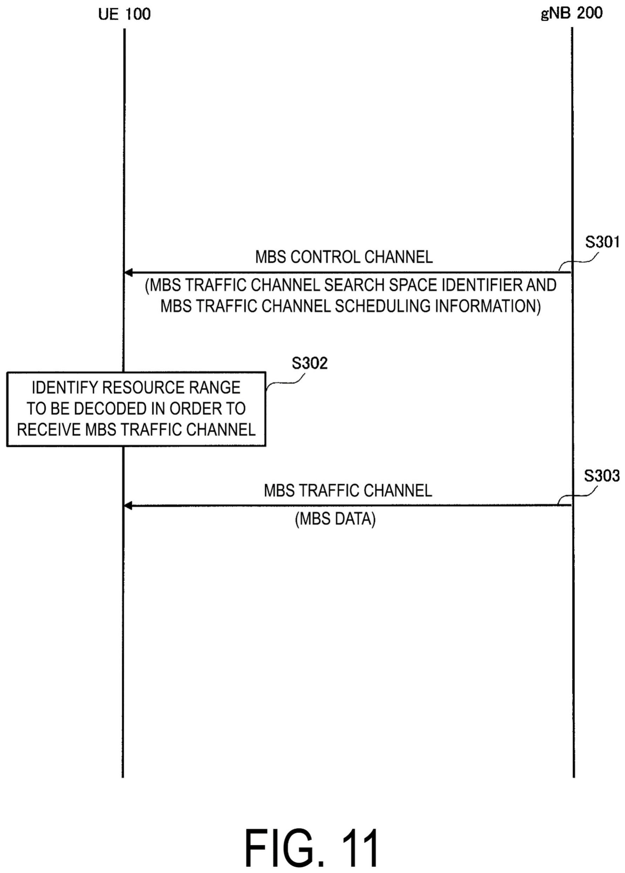

FIG. 11 is a diagram illustrating Operation Example 3 of the mobile communication system 1. Here, description overlapping with those of Operation Examples 1 and 2 described above will be omitted.

As illustrated in FIG. 11, in step S301, the UE 100 receives an MBS control channel. The MBS control channel carries MBS traffic channel scheduling information.

In Operation Example 3, the MBS control channel further carries a search space identifier for the UE 100 to receive an MBS traffic channel (hereinafter referred to as the "MBS traffic channel search space identifier"). The MBS traffic channel search space identifier includes one of search space identifiers included in search space configuration information in the SIB type 1. Here, the gNB 200 associates one of the plurality of search spaces configured by the search space configuration information in the SIB type 1 with the MBS traffic channel. The gNB 200 includes, in the MBS traffic channel search space identifier, the search space identifier of the search space associated with the MBS traffic channel.

In step S302, the UE 100 identifies the resource range to be decoded in order to receive the MBS traffic channel, based on the MBS traffic channel scheduling information and the MBS traffic channel search space identifier received in step S301.

In step S303, the UE 100 receives the MBS traffic channel. Here, firstly, the UE 100 decodes (blindly decodes) the resource range identified in step S302 to acquire DCI carried on the PDCCH. Secondly, the UE 100 receives the PDSCH scheduled by the DCI and receives the MBS traffic channel mapped to the PDSCH. The UE 100 receives the MBS data carried by the MBS traffic channel.

In Operation Example 3, the MBS control channel carries the MBS traffic channel scheduling information corresponding to each of a plurality of MBS traffic channels. The gNB 200 may associate a different search space with each MBS traffic channel. In this case, in step S301, the MBS control channel includes, for each MBS traffic channel of the plurality of MBS traffic channels, a set of the identifier of the MBS traffic channel and the MBS control traffic search space identifier corresponding to the traffic control channel. The identifier of the MBS traffic channel is a TMGI, a session identifier, or an MBS service identifier. In step S305, the UE 100 identifies the resource range to be decoded in order to receive the MBS traffic channel (MBS session) in which the UE 100 takes interest.

In Operation Example 3, when the specific search space is associated with the MBS traffic channel, the gNB 200 need not transmit, on the MBS control channel, the MBS traffic channel scheduling information corresponding to the MBS traffic channel. Here, when the MBS traffic channel is associated with the specific search space, the UE 100 can identify the resource range, based on a preconfigured rule, without depending on the MBS traffic channel scheduling information. Thus, the gNB 200 does not transmit such MBS traffic channel scheduling information.
In the example in Operation Example 3, the MBS control channel notifies the MBS traffic channel search space identifier; however, the MBS traffic channel search space identifier may be notified in the SIB type 1 or the MBS SIB. In this case, the MBS traffic channel search space identifier does not need to be notified on the MBS control channel.

### Operation Example 4 of Mobile Communication System

Operation Example 4 of the mobile communication system 1 according to an embodiment will be described focusing on differences from Operation Examples 1 to 3 described above.

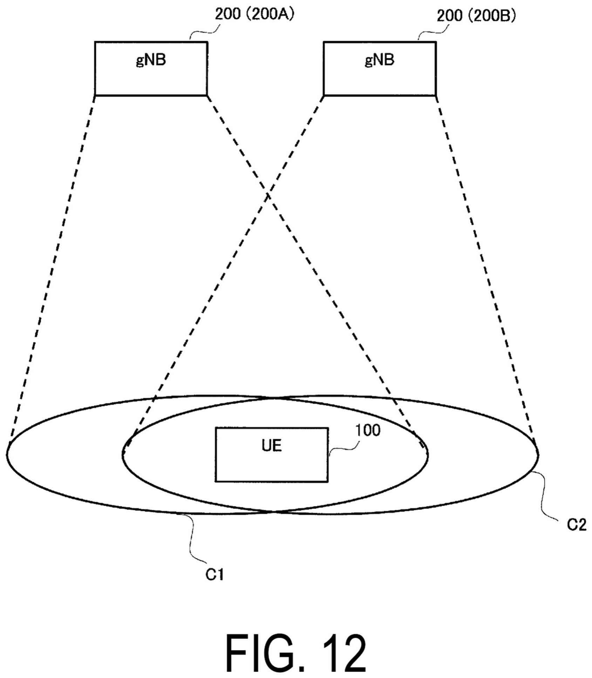

In Operation Examples 1 to 3 described above, the operation of the gNB 200 in the cell of the gNB 200 has been mainly described. In Operation Example 4, in a cell of the gNB 200, the gNB 200 also notifies the UE 100 of information related to a neighboring cell. FIG. 12 is a diagram illustrating an example of an operation environment in Operation Example 4. As illustrated in FIG. 12, a gNB 200A manages a cell C1, a gNB 200B manages a cell C2, and the UE 100 is located in an overlapping area of the cells C1 and C2. Note that one gNB 200 may manage the cells C1 and C2.

In Operation Example 4, the gNB 200 (gNB 200A) managing the cell C1 transmits, to the UE 100 in the cell C1, a notification message related to the MBS transmission in the neighboring cell C2 different from the cell C1. The notification message includes a search space identifier for the UE 100 to receive a predetermined channel provided in the neighboring cell C2. The predetermined channel is an MBS control channel or an MBS traffic channel provided in the neighboring cell C2. The search space identifier indicates a search space that is a resource range to be decoded by the UE 100 in the physical downlink control channel associated with the predetermined channel provided in the neighboring cell C2. Thus, upon receiving the notification message from the cell C1, the UE 100 can identify the search space of the MBS control channel or the MBS traffic channel provided in the neighboring cell C2, based on the notification message.

In Operation Example 4, upon determining that the search space of the predetermined channel provided in the neighboring cell C2 is the specific search space (for example, the search space "0") based on the search space identifier included in the notification message from the cell C1, the UE 100 may omit reception of the scheduling information of the predetermined channel transmitted from the neighboring cell C2 and may receive the predetermined channel provided in the neighboring cell C2. This allows efficient reception of the MBS control channel or the MBS traffic channel of the neighboring cell C2.

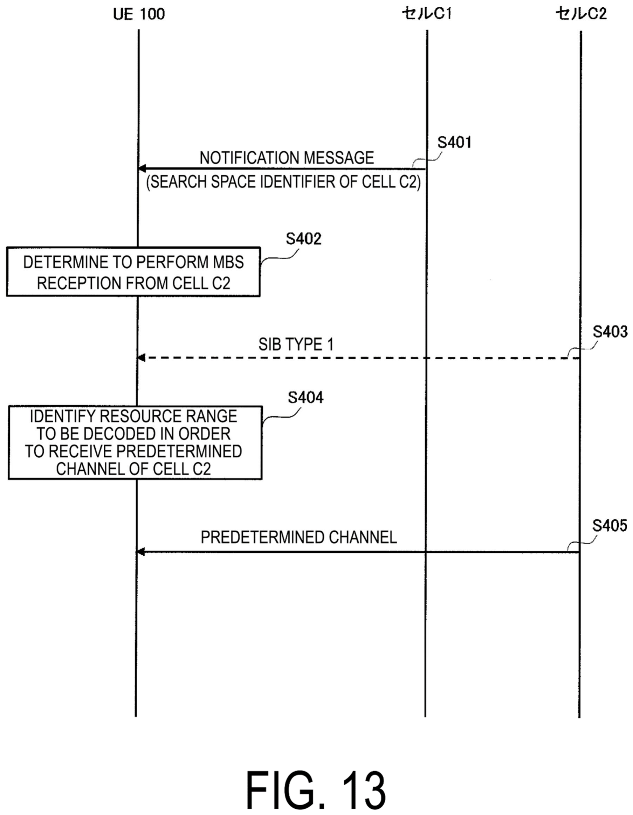

FIG. 13 is a diagram illustrating Operation Example 4 of the mobile communication system 1. Here, description overlapping with those of Operation Examples 1 to 3 described above will be omitted. Here, a gNB 200A is assumed to manage a cell C1 and a gNB 200B is assumed to manage a cell C2; however, one gNB 200 may manage the cells C1 and C2. The UE 100 may be in the RRC idle state or RRC inactive state.

As illustrated in FIG. 13, in step S401, the gNB 200A transmits, in the cell C1, a notification message related to MBS transmission in the cell C2. The UE 100 receives the notification message in the cell C1. The notification message may be an MBS SIB. The notification message may be a message transmitted on an MBS control channel.

The notification message includes a search space identifier for the UE 100 to receive a predetermined channel (MBS control channel or MBS traffic channel) provided in the cell C2. Such a search space identifier includes one of search space identifiers included in search space configuration information in an SIB type 1 broadcasted in the cell C2. Thus, when the UE 100 existing in the cell C1 changes the serving cell of the UE 100 from the cell C1 to the cell C2, the UE 100 can determine, by acquiring only the SIB type 1 of the cell C2, the search space associated with the predetermined channel (MBS control channel or MBS traffic channel) of the cell C2.

In step S401, the gNB 200A may notify the search space identifier of the cell C2 in step S401 only when the specific search space (search space "0") is allocated to the predetermined channel in the neighboring cell C2. For the specific search space, since the UE 100 itself can derive the scheduling and resource range, knowing the allocation of the search space "0" allows the reception of the SIB type 1 of the neighboring cell C2 to be omitted. When the search space "1" is allocated to the predetermined channel in the neighboring cell C2, the gNB 200A may implicitly indicate no allocation of the search space "0" by not notifying the search space identifier of the cell C2 in step S401.

In step S401, gNB 200A may notify the search space identifier of the cell C2 in step S401 only when the specific search space (search space "0") is not allocated to the predetermined channel in the neighboring cell C2.

In step S402, the UE 100 determines to perform MBS reception from the cell C2. For example, when the UE 100 reaches the cell edge of the cell C1 (change of a reception cell at the same frequency) or when the MBS service in the current cell C1 is stopped due to a change in network configuration (change of the reception cell between different frequencies), the UE 100 may determine to perform MBS reception from the cell C2.

In step S403, the UE 100 may receive the SIB type 1 from the cell C2.

In step S404, the UE 100 identifies the scheduling and resource range to be decoded in order to receive the predetermined channel of the neighboring cell C2, based on the search space identifier of the neighboring cell C2 included in the notification message received in step S401. Here, when receiving the SIB type 1 of the neighboring cell C2 in step S403, the UE 100 may identify the scheduling and resource range to be decoded in order to receive the predetermined channel of the neighboring cell C2, further based on the search space parameter included in the SIB type 1.

In step S405, the UE 100 receives the predetermined channel of the cell C2. Here, when the search space identifier notified in step S401 is the search space "0", the UE 100 skips reception of the MBS SIB of the neighboring cell C2 and receives the MBS control channel. The UE 100 may skip reception of the MBS control channel and directly receive the MBS traffic channel, if possible. On the other hand, when the search space identifier notified in step S401 is not the search space "0", the UE 100 receives the MBS SIB of the neighboring cell C2.

In Operation Example 4 described above, the neighboring cell C2 is assumed to include one predetermined channel; however, the neighboring cell C2 may be provided with a plurality of predetermined channels. When the neighboring cell C2 is provided with a plurality of predetermined channels, the notification message transmitted in step S401 may include a search space identifier for each of the plurality of predetermined channels. Thus, even when the neighboring cell C2 is provided with a plurality of predetermined channels, the UE 100 can identify a search space for receiving a desired predetermined channel.

In Operation Example 4 described above, the notification message may include, for each predetermined channel of the plurality of predetermined channels in the neighboring cell C2, bandwidth part information indicating a bandwidth part in which the predetermined channel is to be transmitted. The bandwidth part is a part of the total bandwidth of the neighboring cell C2. The bandwidth part may be a BWP defined in the 5G/NR specifications. The bandwidth part may be a Common Frequency Resource (CFR). Thus, even when the predetermined channel is transmitted in a limited bandwidth part, the UE 100 can appropriately receive the predetermined channel. In an example described below, the bandwidth part is a BandWidth Part (BWP).

For example, the gNB 200A includes transmitted BWP information and/or the search space identifier for each MBS control channel of the neighboring cell C2, in the notification message (MBS SIB and/or MBS control channel) transmitted in step S401. In this case, the notification message includes, for each MBS control channel of a plurality of MBS control channels, a set of the identifier of the MBS control channel and the search space identifier corresponding to the MBS control channel. The identifier of the MBS control channel is, for example, an MBS control channel identifier, a channel identifier allocated to the MBS control channel, or an RNTI allocated to the MBS control channel.

The gNB 200A may include, in the notification message transmitted in step S401, the transmitted BWP information and/or the search space identifier for each MBS traffic channel of the neighboring cell C2. In this case, the notification message includes, for each MBS traffic channel of a plurality of MBS traffic channels, a set of the identifier of the MBS traffic channel and the search space identifier corresponding to the MBS traffic channel. The identifier of the MBS traffic channel is, for example, an MBS traffic channel identifier, a channel identifier allocated to the MBS traffic channel, or an RNTI allocated to the MBS traffic channel.

The UE 100 receives the notification message from the gNB 200A, acquires, from the notification message, the transmitted BWP information and/or the search space identifier of the MBS control channel and the MBS traffic channel corresponding to the MBS service of interest in the neighboring cell C2, and identifies a frequency-direction transmission resource by which the UE 100 attempts to perform reception and/or a time-direction transmission opportunity at which the UE 100 attempts to perform reception. The UE 100 then receives the MBS control channel and/or MBS traffic channel of interest using the identified resource and/or opportunity.

### Operation Example 5 of Mobile Communication System

Operation Example 5 of the mobile communication system 1 according to an embodiment will be described focusing on differences from Operation Examples 1 to 4 described above.

In Operation Examples 1 to 4 described above, the operation related to the identification of the search space has been mainly described. In Operation Example 5, an operation related to a change notification for the MBS control channel (hereinafter referred to as "MBS control channel change notification") will be described. The MBS control channel change notification is a notification indicating that the content of the MBS control channel, in other words, the scheduling information of the MBS traffic channel has been changed.

A change notification RNTI is used in the MBS control channel change notification. The change notification RNTI is an RNTI used for the UE 100 to receive an MBS control channel change notification indicating that the content of the corresponding MBS control channel has been changed. Note that, the MBS control channel change notification is assumed to be used at the start of an MBS session. In this case, the MBS control channel change notification notifies the UE 100 of the start of the MBS session. Note that the MBS control channel change notification may be used in the middle of the session.

When one cell is provided with a plurality of MBS control channels, a plurality of MBS control channel change notifications are also provided. However, the UE 100 may fail to recognize which MBS control channel change notification corresponds to which MBS control channel, and may receive an unnecessary MBS control channel change notification.

In Operation Example 5, the gNB 200 managing a cell broadcasts an MBS SIB. The gNB 200 transmits a plurality of MBS control channels in the cell. The MBS SIB includes a change notification RNTI for each of the plurality of MBS control channels. Thus, even when transmitting a plurality of MBS control channels in a cell, the UE 100 can recognize the change notification RNTI corresponding to each of the plurality of MBS control channels.

In Operation Example 5, the UE 100 selects one change notification RNTI from among a plurality of change notification RNTIs included in the MBS SIB, based on the MBS service received by the UE 100 from among the plurality of MBS control channels. Thus, even when transmitting a plurality of MBS control channels in a cell, the UE 100 can identify the change notification RNTI corresponding to the MBS control channel corresponding to the MBS service received by the UE 100.

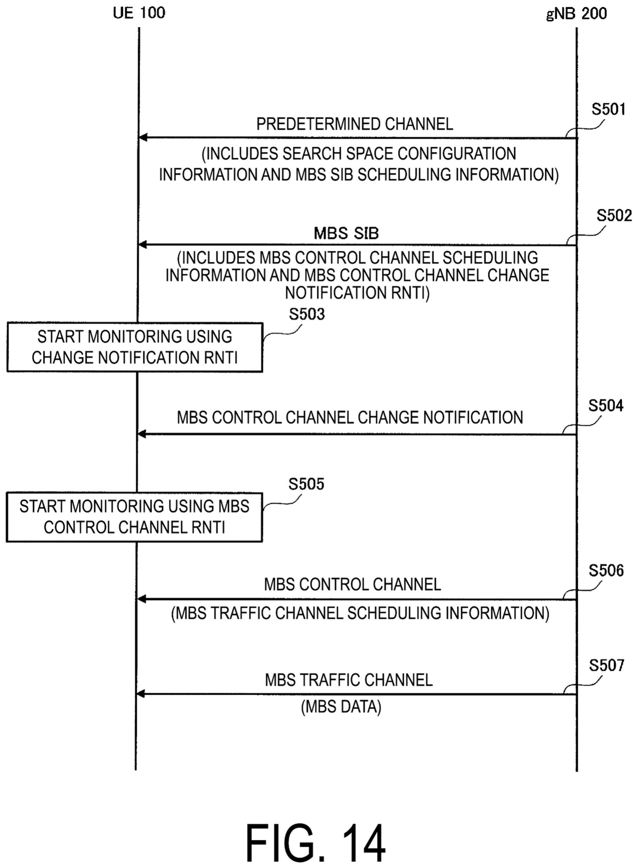

FIG. 14 is a diagram illustrating Operation Example 5 of the mobile communication system 1. Here, description overlapping with those of Operation Examples 1 to 4 described above will be omitted.

As illustrated in FIG. 14, in step S501, the gNB 200 broadcasts an SIB type 1. The SIB type 1 includes search space configuration information and MBS SIB scheduling information. The UE 100 receives the SIB type 1 from the gNB 200.

In step S502, the gNB 200 broadcasts an MBS SIB based on scheduling indicated by the MBS SIB scheduling information included in the SIB type 1. The UE 100 receives the MBS SIB, based on the scheduling indicated by the MBS SIB scheduling information included in the SIB type 1. The MBS SIB includes MBS control channel scheduling information. In Operation Example 5, the gNB 200 broadcasts correspondence information between an MBS control channel and a change notification RNTI in the MBS SIB. For example, the gNB 200 broadcasts a set of the change notification RNTI and an MBS session identifier (TMGI, session ID, or RNTI of the MBS control channel) in the MBS SIB. When an ID is assigned to the MBS control channel, the gNB 200 may broadcast a set of the change notification RNTI and the MBS control channel ID in the MBS SIB. The UE 100 receives the MBS SIB and identifies the change notification RNTI corresponding to the MBS control channel (MBS service). Note that at this point, the MBS session need not have been started yet.

In step S503, the UE 100 performs monitoring (PDCCH monitoring) using the change notification RNTI. Here, the UE 100 may monitor only the change notification RNTI associated with the MBS service of interest. Note that at this point, monitoring (PDCCH monitoring) using the MBS control channel RNTI need not be performed.

Upon receiving the change notification RNTI from the gNB 200 (step S504), the UE 100 starts receiving the MBS control channel (monitoring of the MBS control channel RNTI) in step S505.

In step S506, the UE 100 receives the MBS control channel from the gNB 200.

In step S507, the UE 100 receives the MBS traffic channel from the gNB 200, based on the received MBS control channel.

### Other Embodiments

The operation flows (Operation Examples) described above can be separately and independently implemented, and also be implemented in combination of two or more of the operation flows (Operation Examples). For example, some of the steps in one operation flow may be added to another operation flow. Some of the steps of one operation flow may be replaced with some of the steps of another operation flow.

In the embodiment described above, an example in which the base station is an NR base station (i.e., a gNB) is described; however, the base station may be an LTE base station (i.e., an eNB). The base station may be a relay node such as an Integrated Access and Backhaul (IAB) node. The base station may be a Distributed Unit (DU) of the IAB node.

A program causing a computer to execute each of the processes performed by the UE 100 or the gNB 200 may be provided. The program may be recorded in a computer readable medium. Use of the computer readable medium enables the program to be installed on a computer. Here, the computer readable medium on which the program is recorded may be a non-transitory recording medium. The non-transitory recording medium is not particularly limited, and may be, for example, a recording medium such as a CD-ROM or a DVD-ROM.

Circuits for executing the processing operations to be performed by the UE 100 or the gNB 200 may be integrated, and at least part of the UE 100 or the gNB 200 may be configured as a semiconductor integrated circuit (a chipset or an SoC (System on a chip)).

Embodiments have been described above in detail with reference to the drawings, but specific configurations are not limited to those described above, and various design variation can be made without departing from the gist of the present disclosure.

This application claims priority to US Provisional Patent Application No. 63/169334 (filed on April 1, 2021), the contents of which are incorporated herein by reference in their entirety.

Yet further embodiments are described in the following.

### [Embodiment 1]

A communication control method used in a mobile communication system for providing a multicast broadcast service (MBS) from a base station to a user equipment, the communication control method comprising the steps of:
broadcasting, by a base station, an MBS system information block; and
transmitting, by the base station, scheduling information of an MBS traffic channel on an MBS control channel, wherein
the MBS system information block comprises a search space identifier for a user equipment to receive the MBS control channel, and
the search space identifier indicates a search space that is a resource range to be decoded by the user equipment in a physical downlink control channel associated with the MBS control channel.

### [Embodiment 2]

The communication control method according to Embodiment 1, wherein the MBS system information block comprises, when a plurality of the MBS control channels are provided in one cell of the base station, the search space identifier for each of the plurality of the MBS control channels.

### [Embodiment 3]

The communication control method according to Embodiment 1 or 2, further comprising:
broadcasting, by the base station, a predetermined system information block to be used in scheduling of the MBS system information block, wherein
the broadcasting of the MBS system information block comprises broadcasting the MBS system information block comprising MBS control channel scheduling information indicating scheduling of the MBS control channel, when the MBS control channel is not associated with a specific search space, and
the specific search space is a search space enabling the user equipment to identify the scheduling of the MBS control channel and the resource range in accordance with a preconfigured rule.

### [Embodiment 4]

A communication control method used in a mobile communication system for providing a multicast broadcast service (MBS) from a base station to a user equipment, the communication control method comprising the steps of:
broadcasting, by a base station, a predetermined system information block to be used in scheduling of an MBS system information block;
broadcasting, by the base station, the MBS system information block; and
transmitting, by the base station, scheduling information of an MBS traffic channel on an MBS control channel, wherein
the predetermined system information block comprises a search space identifier for a user equipment to receive the MBS control channel, and
the search space identifier indicates a search space that is a resource range to be decoded by the user equipment in a physical downlink control channel associated with the MBS control channel.

### [Embodiment 5]

The communication control method according to Embodiment 4, wherein the search space identifier is used in common for the MBS system information block and a system information block other than the predetermined system information block.

### [Embodiment 6]

A communication control method used in a mobile communication system for providing a multicast broadcast service (MBS) from a base station to a user equipment, the communication control method comprising the steps of:
broadcasting, by a base station, an MBS system information block; and
transmitting, by the base station, on an MBS control channel, scheduling information of an MBS traffic channel and a search space identifier for a user equipment to receive the MBS traffic channel, wherein
the search space identifier indicates a search space that is a resource range to be decoded by the user equipment in a physical downlink control channel associated with the MBS traffic channel.

### [Embodiment 7]

The communication control method according to Embodiment 6, wherein the transmitting on the MBS control channel comprises transmitting the search space identifier for each of a plurality of MBS traffic channels.

### [Embodiment 8]

The communication control method according to Embodiment 6, wherein
the transmitting on the MBS control channel comprises the steps of:
   transmitting the scheduling information and the search space identifier on the MBS control channel when the MBS traffic channel is not associated with a specific search space; and
   transmitting the search space identifier without transmitting the scheduling information when the MBS traffic channel is associated with the specific search space, and
the specific search space is a search space enabling the user equipment to identify the scheduling of the MBS traffic channel and the resource range in accordance with a preconfigured rule.

### [Embodiment 9]

A communication control method used in a mobile communication system for providing a multicast broadcast service (MBS) from a base station to a user equipment, the communication control method comprising:
transmitting, in a cell, a notification message related to MBS transmission in a neighboring cell different from the cell, from a base station managing the cell to a user equipment, wherein
the notification message comprises a search space identifier for the user equipment to receive a predetermined channel provided in the neighboring cell different from the cell,
the search space identifier indicates a search space that is a resource range to be decoded by the user equipment in a physical downlink control channel associated with the predetermined channel provided in the neighboring cell, and
the predetermined channel is an MBS control channel or an MBS traffic channel provided in the neighboring cell.

### [Embodiment 10]

The communication control method according to Embodiment 9, further comprising:
omitting reception of scheduling information of the predetermined channel transmitted from the neighboring cell and receiving the predetermined channel provided in the neighboring cell, when the user equipment determines that the search space of the predetermined channel provided in the neighboring cell is a specific search space based on the search space identifier, wherein
the specific search space is a search space enabling the user equipment to identify scheduling of the predetermined channel and the resource range in accordance with a preconfigured rule.

### [Embodiment 11]

The communication control method according to Embodiment 9, wherein the notification message comprises, when a plurality of the predetermined channels are provided in the neighboring cell, the search space identifier for each of the plurality of the predetermined channels.

### [Embodiment 12]

The communication control method according to Embodiment 11, wherein
the notification message comprises, for each of the plurality of the predetermined channels, bandwidth part information indicating a bandwidth part in which a corresponding one of the plurality of the predetermined channel is transmitted, and
the bandwidth part is a part of a total bandwidth of the neighboring cell.

### [Embodiment 13]

A communication control method used in a mobile communication system for providing a multicast broadcast service (MBS) from a base station to a user equipment, the communication control method comprising the steps of:
broadcasting, by a base station managing a cell, an MBS system information block for an MBS; and
transmitting, by the base station, a plurality of MBS control channels in the cell, wherein
the MBS system information block comprises a change notification Radio Network Temporary Identifier (RNTI) for each of the plurality of MBS control channels, and
the change notification RNTI is an RNTI used for a user equipment to receive a change notification indicating that a content of a corresponding MBS control channel has been changed.

### [Embodiment 14]

The communication control method according to Embodiment 13, further comprising:
selecting, by the user equipment, one change notification RNTI from among a plurality of the change notification RNTIs comprised in the MBS system information block, based on an MBS service received by the user equipment from among the plurality of MBS control channels.

### [Embodiment 15]

A base station comprising:
a processor configured to perform the communication control method according to any one of Embodiments 1, 4, 6, 9, and 13.

## Claims

1. A communication control method used in a mobile communication system (1) for providing a multicast broadcast service, MBS, from a base station (200) to a user equipment (100), the communication control method comprising the steps of:
broadcasting, by a base station (200), a predetermined system information block to be used in scheduling of an MBS system information block; and
broadcasting, by the base station (200), the MBS system information block, wherein
the predetermined system information block comprises a search space identifier for the user equipment (100) to receive an MBS control channel, and
the search space identifier corresponds to a ControlResourceSetID.

2. The communication control method according to claim 1, wherein the ControlResourceSetID is used to identify a resource block.

3. A chip set for a user equipment (100) configured to communicate with a base station (200) providing a multicast broadcast service, MBS, the chip set configured to
receive, from the base station (200), a predetermined system information block to be used in scheduling of an MBS system information block and the MBS system information block, wherein
the predetermined system information block comprises a search space identifier for the user equipment (100) to receive an MBS control channel, and
the search space identifier corresponds to a ControlResourceSetID.

4. A user equipment (100) comprising the chip set according to claim 3.

5. A base station (200) providing a multicast broadcast service, MBS, to a user equipment (100), the base station (200) comprising:
a transmitter configured to transmit, to the user equipment (100), a predetermined system information block to be used in scheduling of an MBS system information block and the MBS system information block, wherein
the predetermined system information block comprises a search space identifier for the user equipment (100) to receive an MBS control channel, and
the search space identifier corresponds to a ControlResourceSetID.

6. A mobile communication system comprising:
the user equipment according to claim 4; and
the base station according to claim 5.
